# FASCICULE DE BREVET EUROPEEN

(11) **EP 2 893 279 B1**
(45) Date de publication et mention de la délivrance du brevet: **17.08.2016**
(21) Numéro de dépôt: 13786314.8
(22) Date de dépôt: 28.08.2013
(51) Int. Cl.: F28D 20/00

(54) **PROCEDES DE STOCKAGE ET DE LIBERATION D'ENERGIE THERMIQUE, REACTEUR ASSOCIE ET APPLICATION AU STOCKAGE INTERSAISONNIER DE CHALEUR SOLAIRE**
VERFAHREN ZUM SPEICHERN EINER FREIGESETZTEN WÄRMEENERGIE, REAKTOR DAFÜR UND ANWENDUNG ZUR ZWISCHENZEITLICHEN SPEICHERUNG VON SONNENWÄRME
METHODS FOR STORING A RELEASING THERMAL ENERGY, ASSOCIATED REACTOR AND APPLICATION TO THE INTERSEASONAL STORAGE OF SOLAR HEAT

(30) Priorité: 04.09.2012 FR 1258219
(43) Date de publication de la demande: 15.07.2015
(73) Titulaire: Commissariat à l'Énergie Atomique et aux Énergies Alternatives, 75015 Paris (FR)
(72) Inventeur: TANGUY, Gwennyn, F-73370 LE BOURGET DU LAC (FR); MARIAS, Foivos-Epameinon, F-73000 Chambery (FR); WYTTENBACH, Joël, F-73230 THOIRY (FR)
(74) Mandataire: Nony
(86) Numéro de dépôt international: PCT/IB2013/058074
(87) Numéro de publication internationale: WO 2014/037853

(56) Documents cités:
- WO-A1-2008/094094
- US-A- 4 303 121
- US-A- 5 237 827

## Description

### Domaine technique

La présente invention concerne un procédé de stockage et un procédé de libération d'énergie thermique par réaction chimique conforme au préambule des revendications 1 et 2 et un réacteur associé conforme au préambule de la revendication 7.

L'application principale visée est le stockage intersaisonnier de chaleur solaire pour des bâtiments, tels que des bâtiments d'habitation, industriels ou tertiaire.

### Etat de la technique

Des systèmes de stockage d'énergie thermique dans les bâtiments permettraient de répondre en tout ou partie aux besoins de chauffage et de refroidissement en utilisant de l'énergie absorbée à un tout autre moment. Ces systèmes de stockage peuvent être conçus pour la charge et la décharge de l'énergie sur trois types de durées : diurne, hebdomadaire et saisonnière. Le stockage d'énergie thermique inter-saisonnier permet à un bâtiment l'utilisation de la chaleur recueillie durant l'été pour qu'il soit chauffé pendant l'hiver.

Quelques procédés et dispositifs ont déjà été développés pour le stockage intersaisonnier de la chaleur solaire.

Les procédés de stockage d'énergie thermique peuvent être classés selon leur mécanisme de stockage en différentes catégories : le stockage par chaleur sensible, le stockage par chaleur latente, le stockage par sorption et le stockage par réaction chimique.

Dans le stockage d'énergie thermique par chaleur sensible, l'énergie thermique est stockée par le changement de la température du matériau de stockage. Ainsi, la capacité de stockage dépend de la différence de température, de la chaleur spécifique et de la quantité de matériau de stockage. Le stockage par chaleur sensible peut être fait à partir d'un matériau liquide, tel que l'eau ou solide, tel que des roches.

Dans le stockage par chaleur latente, le principe est que lorsque de la chaleur est fournie à un matériau, celui-ci change de phase et passe de l'état solide à l'état liquide pour le stockage de la chaleur sous forme de chaleur latente de fusion ou de liquide à vapeur sous forme de chaleur latente de vaporisation. Lorsque la chaleur emmagasinée est extraite, le matériau subit à nouveau un changement de sa phase de liquide à solide ou de la vapeur à liquide.

Dans le stockage thermique par sorption, le principe est que la chaleur fournie à un couple de sorption XY permet la désorption en deux constituants X et Y qui peuvent être stockés séparément (réaction endothermique). Inversement, la sorption (absorption et/ou adsorption) de l'un des constituants X par l'autre Y permet de former le composé XY avec un dégagement de chaleur (réaction exothermique). L'énergie thermique peut donc être stockée avec des pertes thermiques négligeables puisque la chaleur n'est pas maintenue dans une forme sensible ou latente, mais comme un potentiel chimique. Ainsi, l'énergie est stockée sans perte de chaleur et peut être libérée lorsque cela est nécessaire. En tant que couple de sorption déjà étudié, on peut citer un couple solide-gaz qui est la Zéolithe/H₂O (vapeur d'eau). Pour les réactions de sorption physique (ou physisorption), l'équilibre thermodynamique dépend de la température, de la pression relative du réactif gazeux et du taux d'avancement de la réaction.

Enfin, dans le stockage thermique par réaction chimique, le principe est d'utiliser une réaction chimique réversible avec apport de chaleur dans un sens et dégagement de chaleur dans l'autre sens. Tout comme le stockage thermique par sorption, le stockage thermique par réaction chimique présente l'avantage majeur d'une durée indéfiniment longue de stockage à température ambiante. En outre, le stockage thermique par réaction chimique permet d'obtenir des densités de stockage généralement plus élevées. Dans le cas des réactions thermochimiques, également nommées chimie-sorption, l'équilibre thermodynamique dépend de la température et de la pression relative du réactif gazeux. Elle est indépendante du taux d'avancement de la réaction.

Une des réactions chimiques réversibles déjà connue pour le stockage et la libération d'énergie thermique est la réaction d'hydratation/déshydratation d'un sel hygroscopique. Un sel hygroscopique présente une courbe d'équilibre qui lui est propre et qui délimite les conditions de température et d'humidité de l'air dans lesquelles il subit une hydratation ou à l'inverse une déshydratation. Le document US4,303,121 divulgue un procédé conforme au préambule des revendications 1 et 2 ainsi qu'un réacteur conforme au préambule de la revendication 7.

Ainsi, on a déjà mis en contact un sel hygroscopique approprié avec de l'air chaud pendant l'été afin de provoquer une réaction chimique de déshydratation, cette réaction endothermique permet de stocker de la chaleur. En hiver, on inverse la réaction chimique en réhydratant le sel hygroscopique : la réaction est alors exothermique, ce qui produit de la chaleur qui peut servir à chauffer un bâtiment.

Les contraintes thermodynamiques opposées entre une réaction d'hydratation et une réaction de déshydratation réduisent de fait fortement le choix du sel hygroscopique.

On peut citer ici les sels hygroscopiques que les études expérimentales des inventeurs et d'autres études expérimentales ont mis en évidence comme étant appropriés pour le stockage intersaisonnier de chaleur solaire pour des bâtiments d'habitation. Outre le fait qu'ils peuvent subir des réactions d'hydratation/déshydratation compatibles avec les contraintes thermodynamiques, comme indiqué ci-dessus, ils sont compacts et peuvent être ainsi stockés dans un volume compatible avec celui d'un bâtiment. Il peut s'agir notamment soit du Bromure de Strontium (SrBr₂), comme décrit dans la publication [1], soit du sel communément appelé alun de potasse (Sulfate double d'Aluminium et Potassium) (KAl(SO₄)2), comme décrit dans la publication [2].

Or, à examiner ces mêmes études, il a été constaté que les sels les plus performants d'un point de vue thermodynamique, c'est-à-dire ceux qui intrinsèquement sont susceptibles de produire la chaleur la plus importante en hiver, sont également les plus coûteux. Typiquement, le bromure de strontium très performant peut être fait à partir de strontium et de brome, certes pas rares car disponibles en grande quantité, mais dilués dans l'eau de mer et dans les saumures.

Il existe donc un besoin d'améliorer le stockage et la libération d'énergie thermique par réaction chimique, notamment en vue de diminuer le coût d'investissement des sels hygroscopiques utilisés.

Un besoin particulier est de garantir un volume de stockage desdits sels qui soit compatible avec celui d'une habitation.

### Exposé de l'invention

Pour ce faire, l'invention a pour objet, selon un de ses aspects, un procédé de stockage d'énergie thermique par réaction chimique selon lequel on fait circuler un flux de gaz caloporteur à travers une couche d'un premier sel hygroscopique A puis à travers une couche d'un deuxième sel hygroscopique B, le gaz étant réactif avec les sels A et B, la courbe d'équilibre thermodynamique du sel A étant située plus à gauche que celle du deuxième sel B dans un diagramme de phase pression-température, la circulation du flux de gaz provoquant une réaction de déshydratation à la fois du premier sel A et du deuxième sel B.

Sous un autre de ses aspects, l'invention a également pour objet, un procédé de libération d'énergie thermique par réaction chimique selon lequel on fait circuler un flux de gaz caloporteur à travers une couche d'un premier sel hygroscopique A puis à travers une couche d'un deuxième sel hygroscopique B, le gaz étant réactif avec les sels A et B, la courbe d'équilibre thermodynamique du premier sel A étant située plus à gauche que celle du deuxième sel B dans un diagramme de phase pression-température, la circulation du flux de gaz provoquant une réaction d'hydratation à la fois du premier sel A et du deuxième sel B.

Par « courbe d'équilibre », on entend la définition usuelle, c'est-à-dire la courbe définissant l'équilibre thermodynamique du sel hygroscopique concerné (A ou B) dans des conditions déterminées de température et de pression. Des conditions de température supérieure ou de pression relative inférieure aux conditions d'équilibre sont favorables à la déshydratation. Des conditions de température inférieure ou de pression relative supérieure aux conditions d'équilibre sont favorables à l'hydratation.

Par « située plus à gauche », on entend une position relative de la courbe d'équilibre du sel A plus proche de l'axe de la pression que celle du sel B. Autrement dit, pour une même pression partielle d'eau, la température d'équilibre du sel A est inférieure à celle du sel B. Autrement dit encore, pour une même teneur en eau, la température d'équilibre du sel B est supérieure à celle du sel A.

On rappelle que la courbe d'équilibre thermodynamique est définie par l'équation suivante : Ln (P/P réf) = - ΔHr/RT +ΔSr/R ;
dans laquelle ΔHr et ΔSr sont des constantes propres à chaque sel, P désigne la pression relative du réactif gazeux, P réf la pression de référence, T désigne la température et R est la constante des gaz parfaits.

Le flux de gaz selon l'invention peut être uniquement constitué par un gaz, avantageusement de l'air humide, mais de manière plus générale par tout mélange de gaz avec un gaz à fonction de fluide caloporteur et un autre gaz avec fonction de réactif pour les sels A et B.

Le flux de gaz est avantageusement un flux d'air humide. On précise ici que l'air humide est le nom scientifique usuel donné à l'air vecteur de vapeur d'eau. Ainsi, pour le stockage thermique, l'air humide que l'on fait circuler sur les sels A et B est relativement plus sec et chaud tandis que pour la libération de l'énergie thermique, l'air humide est relativement plus frais et humide.

Ainsi, les inventeurs ont pensé à une solution simple qui consiste à combiner l'effet d'au moins un sel hygroscopique de moindres performances thermodynamiques et moindre coût avec un sel hygroscopique avec de meilleures performances thermodynamiques mais de coût supérieur. La solution selon l'invention n'est nullement suggérée dans l'état de l'art car dans le domaine du stockage thermique par voie chimique, il a été étudié plusieurs sels hygroscopiques mais à chaque fois individuellement sans aucune incitation à utiliser deux sels hygroscopiques en série. Grâce à l'invention, il est possible de diminuer le coût d'investissement des sels hygroscopiques en réduisant la quantité nécessaire du sel le plus coûteux. La solution selon l'invention permet en outre d'utiliser un volume compact de sels hygroscopiques compatible avec le volume d'une habitation.

Autrement dit, l'invention consiste pour la libération d'énergie thermique, qui correspond à la restitution de chaleur en hiver, à faire circuler de l'air relativement frais et humide en commençant par la couche du sel hygroscopique dont la température d'équilibre est la moins élevée pour finir par la couche du sel dont la température d'équilibre est la plus élevée. Ainsi, la température de gaz en sortie peut être proche de celle obtenue avec le sel dont la température d'équilibre est la plus élevée. A titre d'exemple, de l'air humide peut traverser d'abord une couche d'alun de potasse, ce qui permet de le préchauffer en quelque sorte et de l'assécher puis il peut traverser une couche de bromure de strontium qui l'amène au niveau de température souhaité.

Pour le stockage de l'énergie thermique, l'invention consiste à faire circuler du gaz à des conditions de température et d'humidité telles qu'il permet la déshydratation d'au moins un des sels.

Plusieurs configurations sont possibles.

De préférence, la déshydratation à partir d'un flux d'air humide se fait avec les deux conditions suivantes :
o les conditions de température et d'humidité de l'air humide sont telles qu'elles permettent la déshydratation du sel dont la température d'équilibre est la plus élevée ;
o la circulation du flux d'air humide provoquant la réaction de déshydratation se fait, à travers les sels, dans le sens opposé à celle provoquant la réaction d'hydratation.

Ainsi, l'air commence par déshydrater le sel dont la température d'équilibre est la plus élevée, il s'humidifie et se refroidit mais il est encore suffisamment chaud et sec pour déshydrater l'autre sel.

Selon une autre configuration, si la circulation du flux d'air humide provoquant la réaction de déshydratation se fait, à travers les sels, dans le même sens que celle provoquant la réaction d'hydratation, alors l'air humide déshydrate en premier le sel dont la température d'équilibre est la moins élevée et l'air risque alors de ne plus être assez chaud pour déshydrater le second sel. Dans ce cas, les deux sels ne seront pas déshydratés simultanément mais successivement.

Selon encore une autre configuration, quel que soit le sens de passage de l'air humide, on peut également envisager de déshydrater volontairement un sel après l'autre. Dans le cas où on dispose d'un air à une température suffisante pour déshydrater le sel dont la température d'équilibre est inférieure, typiquement au cours d'une période au printemps ou en début de journée, il est envisageable de déshydrater ce sel. L'autre sel est alors déshydraté ultérieurement et sa déshydratation absorbe alors une énergie inférieure à celle nécessaire pour déshydrater l'ensemble.

Avantageusement, le premier sel A est choisi parmi les sels cités dans la colonne de gauche du tableau ci-dessous, tandis que le deuxième sel B est choisi respectivement parmi les sels cités dans la colonne de droite du tableau ci-dessous.

Ainsi, des couples de sels A/B que l'on peut utiliser avantageusement dans le cadre de l'invention peuvent être comme mentionnés dans le tableau :

| | Sel A | Sel B |
|---|---|---|
| Couple N°1 | KAl(SO₄)₂.(3/12)H₂O | SrBr₂.(1/6)H₂O |
| Couple N°2 | Sr(OH)₂.(1/8)H₂O | SrBr₂.(1/6)H₂O |
| Couple N°3 | Sr(OH)₂.(1/8)H₂O | Na2ₛ.(2/5)H₂O |
| Couple N°4 | Na₂S.(2/5)H₂O | Na2ₛ.(O/2)H₂O |
| Couple N°5 | NH₄Al(SO₄)_{2.}(4/12)H₂O | NiSO₄.(5/0)H₂O |
| Couple N°6 | NH₄Al(SO₄)_{2.}(4/12)H₂O | SrBr₂.(1/6)H₂O |

On précise ici que les chiffres donnés entre parenthèses dans le tableau, tels que (3/12), (1/6), (0/2).... indiquent les moles d'H2O contenues dans le sel sous sa forme déshydratée puis hydratée. Par exemple, la forme hydratée du Bromure de strontium est SrBr₂.6H₂0 alors que sa forme déshydratée est SrBr₂.1H₂0.

L'invention concerne également, sous un autre de ses aspects, un réacteur pour le stockage et la libération d'énergie thermique, de type à lit fixe, comportant au moins un étage sur lequel est déposé un empilement d'une couche d'un premier sel hygroscopique A sur une couche d'un deuxième sel hygroscopique B, la courbe d'équilibre du premier sel étant différente du deuxième sel.

Le réacteur peut comporter avantageusement en outre une structure à mailles ouvertes séparant la couche du premier sel de la couche du deuxième sel, la structure n'étant pas maintenue mécaniquement dans le réacteur. Ainsi, le déplacement vertical de la structure peut permettre le gonflement et dégonflement de chacun des deux sels au cours de leur réaction respectivement d'hydratation et de déshydratation, indépendamment l'un de l'autre sans mélange des deux sels.

Les ouvertures de maille de la structure sont de préférence comprises entre 0.05 et 0.1 mm. Avec une telle gamme d'ouvertures de maille, le gaz humide peut facilement circuler à travers les sels et tout mélange entre les deux sels est évité.

La structure à mailles ouvertes peut être métallique mais également en un matériau composite, en matière textile ou en matériau polymère. Il peut s'agir d'une structure tissée (tissu), perforée ou frittée

La hauteur totale de la couche du premier sel et de la couche du deuxième sel peut être comprise entre 5 et 10 cm. Le volume de stockage nécessaire pour les sels est avantageusement compris entre 5 et 10 m³, ce qui est à dire un volume compact tout à fait compatible avec le volume d'une habitation.

L'invention concerne également, sous un autre de ses aspects, un ensemble de deux réacteurs reliés en série l'un à l'autre, un des réacteurs comportant au moins un étage sur lequel est déposée une couche d'un premier sel hygroscopique A, l'autre des réacteurs comportant au moins un étage sur lequel est déposée une couche d'un deuxième sel hygroscopique B, la courbe d'équilibre du premier sel étant différente du deuxième sel. Ainsi, selon ce mode de réalisation, au lieu d'un seul réacteur de type à lit fixe comportant en son sein les deux sels selon l'invention, on peut utiliser deux réacteurs de type à lit fixe ou de type à lit fluidisé circulant, chacun de ces deux réacteurs comportant en son sein uniquement un seul des deux sels. Ce mode de réalisation peut être avantageux, car il peut permettre de n'utiliser qu'un seul réacteur, c'est-à-dire celui comportant le sel dont la température d'équilibre est la moins élevée, lorsque, par exemple la puissance et/ou la température de chauffage d'une habitation requise(s) est moindre.

L'invention concerne enfin l'application des procédés, du réacteur de type à lit fixe ou de l'ensemble à deux réacteurs en série qui viennent d'être décrits au stockage intersaisonnier de chaleur solaire.

### Description détaillée

D'autres avantages et caractéristiques de l'invention ressortiront mieux à la lecture de la description détaillée de l'invention faite à titre illustratif et non limitatif en référence aux figures suivantes parmi lesquelles :
- la figure 1 est une vue en coupe schématique d'un empilement de deux couches de sels différents selon un exemple de l'invention ;
- la figure 2 illustre schématiquement les diagrammes d'équilibre pression-température et/ou d'équilibre teneur en humidité-température du système d'air humide et deux sels différents selon un exemple de l'invention ;
- la figure 3 est une vue en coupe partielle et en perspective d'un exemple de réacteur, de type à lit fixe selon l'invention ;
- les figures 4A et 4B illustrent en vue de coupe schématique un empilement de deux couches de sels différents entre lesquelles est interposé une structure ouverte de séparation selon un exemple de l'invention.

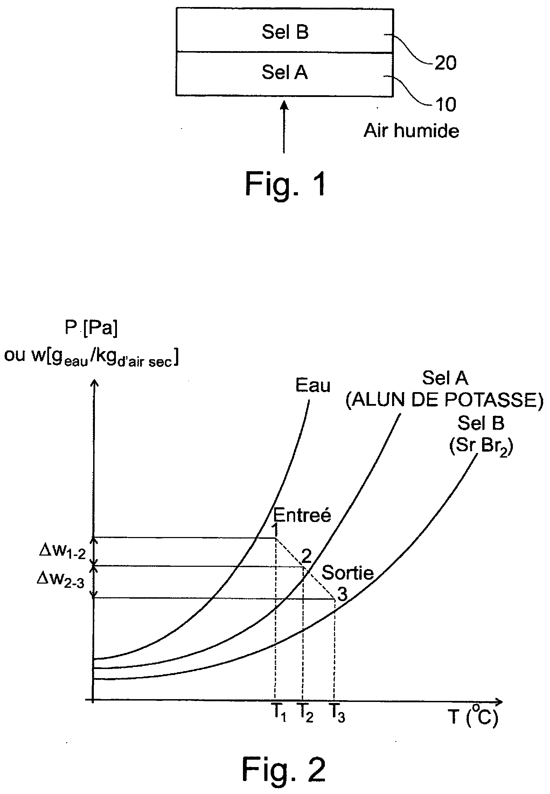

La figure 1 illustre la mise en oeuvre du procédé de stockage ou de libération d'énergie thermique par réaction chimique selon l'invention. Une couche 10 d'un premier sel A hygroscopique est surmontée d'une deuxième couche 20 d'un deuxième sel B hygroscopique.

La courbe d'équilibre du premier sel A est située à gauche de celle du deuxième sel B dans un diagramme de phase pression-température. Autrement dit, pour une même pression partielle d'eau, la température d'équilibre du sel A est inférieure à celle du sel B. Autrement dit encore, pour une même teneur en eau, la température d'équilibre du sel B est supérieure à celle du sel A.

Le sel A peut-être avantageusement un sel peu coûteux tel que l'alun de potasse tandis que le sel B peut être un sel plus coûteux tel que le bromure de strontium.

L'empilement des deux couches 10, 20 des deux sels différents A, B peut être réalisé dans un réacteur de type à lit fixe comme détaillé ci-après.

Selon l'invention, en période hivernale, on fait circuler un flux d'air humide qui va hydrater le premier sel A, puis le deuxième sel B. On utilise préférentiellement l'humidité contenue naturellement d'ans l'air mais le flux d'air humide peut aussi être généré par évaporation d'eau depuis un réservoir prévu à cet effet.

La réaction entre la vapeur d'eau contenue dans l'air humide et le premier sel A produit de la chaleur. Puis, l'air humide, déshydraté en partie et réchauffé par son passage à travers la couche 10 du premier sel A, traverse la couche 20 du deuxième sel B. La réaction entre la vapeur d'eau contenue dans l'air humide et le deuxième sel B produit à nouveau de la chaleur.

La figure 2 illustre ce fonctionnement : elle montre l'évolution des conditions thermodynamiques de l'air aux points 1, 2 et 3 qui correspondent respectivement à la température en entrée de la couche 10 du premier sel A, en sortie de la couche 10 du premier sel A, et en sortie de la couche 20 du deuxième sel B.

Les valeurs Δw représentent les pertes en eau (en humidité absolue) de l'air humide lors du passage à travers les sels A puis B. Ainsi, lors de l'hydratation respective du sel A puis du sel B, la température en entrée T1 augmente jusqu'à la température T2 pour atteindre au final la température T3. Cette augmentation de température T3-T1 correspond donc à une puissance de chauffage dont on peut disposer par exemple pour chauffer un bâtiment ou produire de l'eau chaude sanitaire.

En période estivale, pour le stockage d'énergie thermique, on fait circuler un flux d'air qui va déshydrater le deuxième sel B puis le premier sel A. Le flux d'air peut circuler dans le sens contraire à ce qui vient d'être décrit pour l'hydratation, c'est-à-dire traverser d'abord la couche 20 du sel B puis la couche 10 du sel A. De manière alternative, il peut circuler dans le même sens à ce qui vient d'être décrit pour l'hydratation, c'est-à-dire traverser d'abord la couche 10 du sel A puis la couche 20 du sel B.

Pour faire traverser les deux sels A et B en série selon l'invention, on peut superposer les deux couches 10, 20 dans un même réacteur de type à lit fixe. On peut également mettre chacune des deux couches 10, 20 dans un réacteur propre de type à lit fixe ou de type à lit fluidisé circulant et relier les deux réacteurs en série. Un avantage d'utiliser deux réacteurs séparés l'un de l'autre est qu'il est possible d'en utiliser qu'un seul, c'est-à-dire hydrater uniquement le sel dont la température d'équilibre est la moins élevée, quand le besoin de restitution de chaleur est moindre.

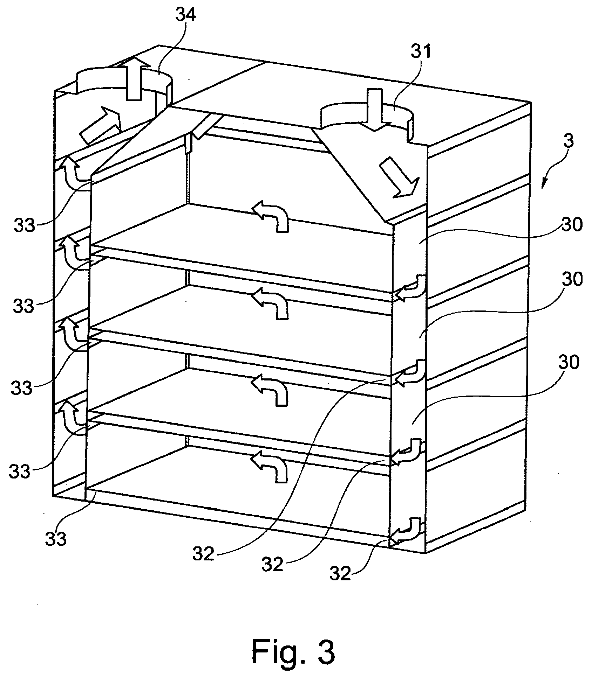

On a représenté en figure 3 un réacteur 3 de type à lit fixe à plusieurs étages 30 convenant à la mise en oeuvre de l'invention. Le réacteur 3 comporte une ouverture d'entrée 31 par laquelle un flux d'air humide peut circuler et pénétrer par la fente inférieure 32 de chaque étage 30 et ainsi circuler de manière répartie dans chaque étage 30.

Le flux d'air ayant traversé les deux couches 10, 20 des deux sels A et B au niveau de chaque étage 30 sort ensuite par la fente supérieure 33 pour au final sortir par l'ouverture de sortie 34 du réacteur 3.

Sur chacun de ces étages 30, on peut déposer un empilement d'une couche 10 du premier sel A sur une couche 20 du deuxième sel B. Chacune des deux couches 10, 20 est de préférence de hauteur uniforme. La hauteur totale de deux couches superposées 10, 20 est comprise, par exemple, entre 5 et 10 cm. Les quantités respectives de chaque sel A, B sont calculées en fonction des paramètres suivants : cinétiques de réaction des matériaux, densités énergétiques des réactifs, quantité d'énergie que l'on souhaite extraire de chacun des réactifs, pertes de charge de la couche totale, conditions de température et humidité en entrée, conditions de température souhaitées en sortie, optimisation technico-économique.

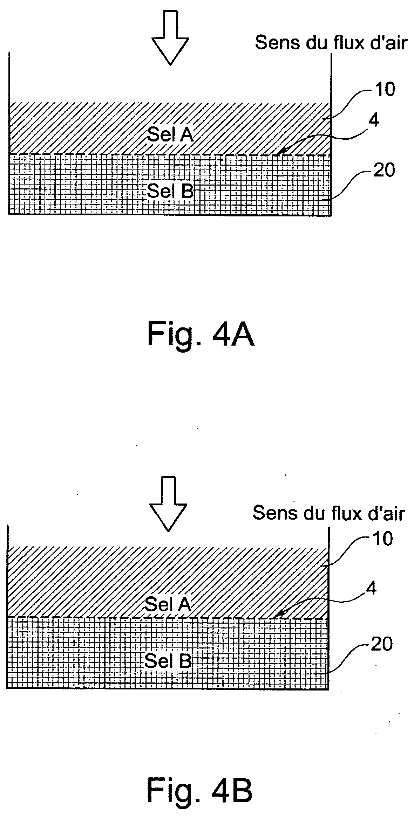

Entre une couche 10 d'un premier sel A et une couche 20 d'un deuxième sel B, on peut insérer un tissu 4 de séparation, de préférence métallique. Le diamètre du ou des fils du tissu ainsi que les ouvertures de maille du tissu sont adaptées à la fois pour laisser facilement passer l'air et pour empêcher le mélange des deux sels A et B entre eux. Le tissu métallique 4 est non maintenu mécaniquement dans le réacteur afin de permettre le gonflement et le dégonflement de chaque sel en cours de réaction indépendamment. On a représenté en figures 4A et 4B, les configurations respectivement déshydratée et hydratée des couches 10 du sel A et du sel B. Ainsi, l'hydratation des sels A et B les fait gonfler de manière libre sans qu'il y ait de contraintes mécaniques générées sur le tissu ou grille 4 de séparation.

A titre d'exemple, un tissu métallique de diamètre unitaire de fil égal à 0.040 mm, avec une ouverture de maille nominale égale à 0.071 mm convient parfaitement pour séparer une couche d'alun de potasse d'une couche de bromure de strontium.

Bien que décrite en relation avec un flux d'air humide, l'invention peut tout aussi bien être mise en oeuvre avec un flux de mélange d'un gaz à fonction de fluide caloporteur et d'un gaz à fonction de réactif avec les sels A, B.

De même, si l'invention a été décrite avec la mise en série de deux sels A, B de courbes d'équilibre différentes, l'invention peut tout aussi bien être mise en oeuvre en mettant en série un nombre supérieur de sels, par exemple trois sels différents.

L'invention n'est pas limitée aux exemples qui viennent d'être décrits ; on peut notamment combiner entre elles des caractéristiques des exemples illustrés au sein de variantes non illustrées.

### REFERENCES CITEES

[1] : « Solar heating and cooling by a thermochemical process. First experiments of a prototype storing 60 kWh by a solid/gas reaction » de Mauran, S., Lahmidi, H., Goetz, V. Solar Energy Vol. 82, Issue 7, July 2008, pages 623-636 ;
[2] : « Evaluation par analyse thermique différentielle des chaleurs de déshydratation de plusieurs aluns de chrome, aluminium et fer » de Mireille HARMELIN, Journal of thermal analysis, Vol. 1 (1969) pages 137-150.

## Revendications

1. Procédé de stockage d'énergie thermique par réaction chimique selon lequel on fait circuler un flux de gaz caloporteur à travers une couche (10) d'un premier sel hygroscopique A **caractérisé en ce que** l'on fait ensuite circuler le flux de gaz caloporteur à travers une couche (20) d'un deuxième sel hygroscopique B, le gaz étant réactif avec les sels A et B, la courbe d'équilibre thermodynamique du sel A étant située plus à gauche que celle du deuxième sel B dans un diagramme de phase pression-température, la circulation du flux de gaz provoquant une réaction de déshydratation à la fois du premier sel A et du deuxième sel B.

2. Procédé de libération d'énergie thermique par réaction chimique selon lequel on fait circuler un flux de gaz caloporteur à travers une couche (10) d'un premier sel hygroscopique A **caractérisé en ce que** l'on fait ensuite circuler le flux de gaz caloporteur à travers une couche (20) d'un deuxième sel hygroscopique B, le gaz étant réactif avec les sels A et B, la courbe d'équilibre thermodynamique du premier sel A étant située plus à gauche que celle du sel B du deuxième sel dans un diagramme de phase pression-température, la circulation du flux de gaz provoquant une réaction d'hydratation à la fois du premier sel A et du deuxième sel B.

3. Procédé de stockage ou de libération d'énergie thermique selon la revendication 1 ou la revendication 2, selon lequel le flux de gaz est un flux d'air humide.

4. Procédé de stockage et de libération d'énergie thermique selon la revendication 1 en combinaison avec les revendications 2 et 3, selon lequel la circulation du flux d'air humide provoquant la réaction de déshydratation se fait, à travers les sels, dans le même sens que celle provoquant la réaction d'hydratation.

5. Procédé de stockage et de libération d'énergie thermique selon la revendication 1 en combinaison avec les revendications 2 et 3, selon lequel la circulation du flux d'air humide provoquant la réaction de déshydratation se fait, à travers les sels, dans le sens opposé à celle provoquant la réaction d'hydratation.

6. Procédé selon l'une quelconque des revendications précédentes, selon lequel le premier sel A est choisi parmi le sulfate double d'aluminium et potassium (KAl(SO₄)₂), hydroxyde de strontium Sr(OH)₂, sulfure de sodium Na₂S, sulfate d'aluminium et d'ammonium NH₄Al(SO₄)₂, tandis que le deuxième sel B est choisi respectivement parmi le bromure de strontium (SrBr₂), sulfure de sodium (Na₂S), sulfate de nickel (NiSO₄).

7. Réacteur (3) pour le stockage et la libération d'énergie thermique, de type à lit fixe, **caractérisé en ce qu'**il comporte au moins un étage (30) sur lequel est déposé un empilement d'une couche (10) d'un premier sel hygroscopique A sur une couche (20) d'un deuxième sel hygroscopique B, la courbe d'équilibre thermodynamique du premier sel A étant située plus à gauche que celle du deuxième sel B dans un diagramme de phase pression-température.

8. Réacteur selon la revendication 6, comportant en outre une structure à mailles ouvertes (4) séparant la couche du premier sel de la couche du deuxième sel, la structure n'étant pas maintenue mécaniquement dans le réacteur.

9. Réacteur selon la revendication 7, dans lequel les ouvertures de maille de la structure sont comprises entre 0.05 et 0.1 mm.

10. Réacteur selon la revendication 8 ou 9, dans lequel la structure est métallique, en matériau composite, en matière textile ou en matériau polymère.

11. Réacteur selon l'une des revendications 7 à 10, dans lequel la hauteur totale de la couche du premier sel et de la couche du deuxième sel est comprise entre 5 et 10 cm.

12. Ensemble de deux réacteurs reliés en série l'un à l'autre, un des réacteurs étant conforme à la revendication 7.

13. Application du procédé selon l'une quelconque des revendications 1 à 6, du réacteur de type à lit fixe selon l'une quelconque des revendications 7 à 11, ou de l'ensemble selon la revendication 12 au stockage intersaisonnier de chaleur solaire.

## Patentansprüche

1. Verfahren zur Speicherung von thermischer Energie durch eine chemische Reaktion, bei der man einen Strom eines Wärmeträgergases durch eine Schicht (10) eines ersten hygroskopischen Salzes A leitet, **dadurch gekennzeichnet, dass** man den Strom des Wärmeträgergases danach durch eine Schicht (20) eines zweiten hygroskopischen Salzes B leitet, wobei das Gas mit den Salzen A und B reaktiv ist, die thermodynamische Gleichgewichtskurve des Salzes A in einem Druck/Temperatur-Phasendiagramm weiter links liegt als diejenige des zweiten Salzes B, und der Strom des Gases eine dehydrierende Reaktion sowohl des ersten Salzes A als auch des zweiten Salzes B hervorruft.

2. Verfahren zur Freisetzung von thermischer Energie durch eine chemische Reaktion, bei der man einen Strom eines Wärmeträgergases durch eine Schicht (10) eines ersten hygroskopischen Salzes A leitet, **dadurch gekennzeichnet, dass** man den Strom des Wärmeträgergases danach durch eine Schicht (20) eines zweiten hygroskopischen Salzes B leitet, wobei das Gas mit den Salzen A und B reaktiv ist, die thermodynamische Gleichgewichtskurve des Salzes A in einem Druck/Temperatur-Phasendiagramm weiter links liegt als diejenige des zweiten Salzes B, und der Strom des Gases eine hydrierende Reaktion sowohl des ersten Salzes A als auch des zweiten Salzes B hervorruft.

3. Verfahren zur Speicherung oder Freisetzung von thermischer Energie nach Anspruch 1 oder 2, bei dem der Strom des Gases ein Strom feuchter Luft ist.

4. Verfahren zur Speicherung und Freisetzung von thermischer Energie nach Anspruch 1 in Kombination mit den Ansprüchen 2 und 3, bei dem der Strom der feuchten Luft, der die dehydrierende Reaktion bewirkt, in der gleichen Richtung durch die Salze hindurchgeht wie der Strom, der die hydrierende Reaktion bewirkt.

5. Verfahren zur Speicherung und Freisetzung von thermischer Energie nach Anspruch 1 in Kombination mit den Ansprüchen 2 und 3, bei dem der Strom der feuchten Luft, der die dehydrierende Reaktion bewirkt, entgegengesetzt zu dem Strom, der die hydrierende Reaktion bewirkt, durch die Salze hindurchgeht.

6. Verfahren nach einem der vorstehenden Ansprüche, bei dem das erste Salz ausgewählt ist unter Aluminium-Kaliumdoppelsulfat (KAl(SO₄)₂), Strontiumhydroxid Sr(OH)₂, Natriumsulfid Na₂S, Aluminium-Ammoniumsulfat NH₄Al(SO₄)₂, während das zweite Salz B jeweils ausgewählt ist unter Strontiumbromid (SrBr₂), Natriumsulfid (Na₂S), Nickelsufat (NiSO₄).

7. Reaktor zur Speicherung und Freisetzung von thermischer Energie, mit einem festen Bett, **dadurch gekennzeichnet, dass** er wenigstens eine Stufe (30) aufweist, auf der ein Stapel aus einer Schicht (10) eines ersten hygroskopischen Salzes A auf einer Schicht (20) eines zweiten hygroskopischen Salzes B angeordnet ist, wobei die thermodynamische Gleichgewichtskurve des ersten Salzes A in einem Druck/Temperatur-Phasendiagramm links von derjenigen des zweiten Salzes B liegt.

8. Reaktor nach Anspruch 6, der weiterhin eine offene Maschenstruktur (4) aufweist, die die Schicht des ersten Salzes von der Schicht des zweiten Salzes trennt, wobei diese Struktur nicht mechanisch in dem Reaktor gehalten ist.

9. Reaktor nach Anspruch 7, bei dem die Maschenöffnungen der Struktur zwischen 0,05 und 0,1 mm betragen.

10. Reaktor nach Anspruch 8 oder 9, bei dem die Struktur metallisch, aus einem Verbundmaterial, einem textilen Material oder einem Polymermaterial ist.

11. Reaktor nach einem der Ansprüche 7 bis 10, bei dem die Gesamthöhe der Schicht des ersten Salzes und der Schicht des zweiten Salzes zwischen 5 und 10 cm beträgt.

12. Ensemble mit zwei in Reihe miteinander verbundenen Reaktoren, bei dem einer der Reaktoren gemäß Anspruch 7 ausgebildet ist.

13. Anwendung des Verfahrens nach einem der Ansprüche 1 bis 6, des Festbett-Reaktors nach einem der Ansprüche 7 bis 11 oder des Ensembles nach Anspruch 12 zur jahreszeitlichen Speicherung von Sonnenwärme.

## Claims

1. A process for storing thermal energy by chemical reaction wherein a flow of heat transfer gas is circulated through a layer (10) of a first hygroscopic salt A **characterized by** the fact that a flow of heat transfer gas through a layer is then circulated through a layer (20) of a second hygroscopic salt B, the gas being reactive with the salts A and B, the thermodynamic equilibrium curve of the salt A being located further to the left than that of the second salt B in a pressure-temperature phase diagram, the circulation of the flow of gas giving rise to a dehydration reaction both of the first salt A and of the second salt B.

2. A process for releasing thermal energy by chemical reaction wherein a flow of heat transfer gas is circulated through a layer (10) of a first hygroscopic salt A **characterized by** the fact that a flow of heat transfer gas through a layer (20) is then circulated through a layer of a second hygroscopic salt B, the gas being reactive with the salts A and B, the thermodynamic equilibrium curve of the salt A being located further to the left than that of the salt B of the second salt in a pressure-temperature phase diagram, the circulation of the flow of gas giving rise to a hydration reaction both of the first salt A and of the second salt B.

3. The process for storing or releasing thermal energy as claimed in claim 1 or claim 2, wherein the flow of gas is a flow of moist air.

4. The process for storing and releasing thermal energy as claimed in claim 1 in combination with claims 2 and 3, wherein the circulation of the flow of moist air that gives rise to the dehydration reaction takes place, through the salts, in the same direction as that which gives rise to the hydration reaction.

5. The process for storing and releasing thermal energy as claimed in claim 1, in combination with claims 2 and 3, wherein the circulation of the flow of moist air that gives rise to the dehydration reaction takes place, through the salts, in the opposite direction to that which gives rise to the hydration reaction.

6. The process as claimed in anyone of the preceding claims, wherein the first salt A is selected from the double sulfate of aluminum and potassium (KAl(SO₄)₂), strontium hydroxide Sr(OH)₂, sodium sulfide Na₂S and ammonium aluminum sulfate NH₄Al(SO₄)₂, while the second salt B is respectively selected from strontium bromide (SrBr₂), sodium sulfide (Na₂S), and nickel sulfate (NiSO₄).

7. A reactor (3) for storing and releasing thermal energy, of the fixed bed type, **characterized in** it comprises at least one stage (30) deposited on which is a stack of a layer of a first hygroscopic salt A on a layer (20) of a second hygroscopic salt B, the thermodynamic equilibrium curve of the first salt A being located further to the left than that of the second salt B in a pressure-temperature phase diagram.

8. The reactor as claimed in claim 6, additionally comprising an open-mesh structure (4) separating the layer of the first salt from the layer of the second salt, the structure not being held mechanically in the reactor.

9. The reactor as claimed in claim 7, wherein the mesh openings of the structure are between 0.05 and 0.1 mm.

10. The reactor as claimed in claim 8 or in claim 9, wherein the structure is metallic, made of composite material, made of textile material or made of polymer material.

11. The reactor as claimed in any one of claims 7 to 10, wherein the total height of the layer of the first salt and of the layer of the second salt is between 5 and 10 cm.

12. A set of two reactors connected in series to one another, one of the reactors being as claimed in claim 7.

13. An application of the process as claimed in any one of Claims 1 to 6, of the reactor of the fixed bed type as claimed in any one of Claims 7 to 10, or of the set as claimed in claim 12 to the interseasonal storage of solar heat.
